# EUROPEAN PATENT APPLICATION

(11) **EP 2 112 389 A2**
(43) Date of publication of application: **28.10.2009**
(21) Application number: 09005722.5
(22) Date of filing: 23.04.2009
(51) Int. Cl.: F16D 28/00

(54) **Clutch control system**

(30) Priority: 23.04.2008 JP 2008112997
(71) Applicant: AISIN AI Co., Ltd., Nishio-shi, Aichi-ken (JP)
(72) Inventor: Kawamoto, Masaki, Nishio-shi Aichi-ken (JP); Fukaya, Masaru, Nishio-shi Aichi-ken (JP)
(74) Representative: Marshall, John Grahame

(57) **Abstract**

A clutch control system includes a release fork (10) rotatably supported by a release shaft (15) via a support portion (11) and including a press arm (12) and a drive arm (13), the press arm (12) of which an end portion presses a release bearing (31) provided at a clutch (30) to bring the clutch to one of an engagement state and a disengagement state, a sector gear (14) including sector teeth (14a), the sector teeth (14a) being formed into an arc shape concentric to the release shaft (15), a worm wheel (20) rotatably supported by a wheel shaft (23), the worm wheel (20) including teeth (20a), a pinion gear (21) integrally formed at the worm wheel (20) and engaging with the sector teeth (14a), and a worm (24) driven to rotate by an electric motor (25) and engaging with the teeth (20a).

## Description

### FIELD OF THE INVENTION

The present invention relates to a clutch control system.

### BACKGROUND

A known clutch control system using an electric motor for engaging or disengaging a clutch is disclosed in JP2003-166557A, for example. The clutch control system disclosed includes a release fork rotating about a rotational center at an intermediate portion. One end of the release fork is in contact with a release bearing of the clutch and the other end of the release fork is pressed by a push rod so as to engage or disengage the clutch. The clutch control system also includes a reduction gear that reduces rotations of the electric motor and then converts the reduced revolutions into a force for pressing the release fork via the push rod. The reduction gear is constituted by a planetary gear reduction mechanism including multiple pinion gears, a carrier, a fixed ring gear, an output ring gear, and a sun gear. The carrier supports each of the pinion gears to be rotatable. The fixed ring gear, which is prohibited to rotate, engages with the pinion gears. The output ring gear is connected to the other end of the release fork via the push rod so as to engage with the pinion gears. The output ring gear has a different number of teeth from that of the fixed ring gear. The sun gear driven by the electric motor engages with each of the pinion gears.

The aforementioned clutch control system may be functionally satisfied. However, in order to operate the release fork, the aforementioned clutch control system requires the planetary gear reduction mechanism and the push rod for connecting the planetary gear reduction mechanism with the release fork, which leads to an increase of the number of components. In addition, an increase in manufacturing cost may be inevitable.

A need thus exists for a clutch control system which is not susceptible to the drawback mentioned above.

### SUMMARY OF THE INVENTION

According to an aspect of the present invention, a clutch control system includes a release fork rotatably supported by a release shaft via a support portion and including a press arm and a drive arm extending from the support portion in a radial direction, the press arm of which an end portion presses a release bearing provided at a clutch to bring the clutch to one of an engagement state and a disengagement state, a sector gear including sector teeth integrally formed at an end portion, the sector teeth being formed into an arc shape concentric to the release shaft, a worm wheel rotatably supported by a wheel shaft arranged in parallel with the release shaft, the worm wheel including teeth, a pinion gear integrally formed at the worm wheel and engaging with the sector teeth, and a worm driven to rotate by an electric motor and engaging with the teeth of the worm wheel to rotate the worm wheel. Preferably the teeth of the worm wheel are arranged around a rotary axis of the worm sheel, extending around that axis for less than 180°, advantageously for about 90°.

According to the aforementioned invention, the release fork rotates by means of the engagement of the sector gear integrally formed at the drive arm with the pinion gear integrally formed at the worm wheel that is driven by the electric motor. Thus, individual component members of a mechanism for converting rotations of the electric motor into a rotation of the release fork are only the worm, the worm wheel, and the pinion gear. Because the clutch control system according to the present invention is constituted by the small number of component members and the simple structure, a manufacturing cost of the clutch control system may be decreased. In addition, the rotations of the motor (i.e., a speed thereof) is reduced by two steps, i.e., the first step is achieved by the worm and the worm wheel, and the second step is achieved by the pinion gear and the sector gear. Thus, a sufficiently large reduction ratio is obtained.

### BRIEF DESCRIPTION OF THE DRAWINGS

The foregoing and additional features and characteristics of the present invention will become more apparent from the following detailed description considered with the reference to the accompanying drawings, wherein:

Fig. 1 is a side view illustrating an entire structure of a clutch control system when a release bearing is in a non-operating state according to an embodiment of the present invention; and

Fig. 2 is a side view illustrating the entire structure of the clutch control system shown in Fig. 1 when the release bearing is in an operating state.

### DETAILED DESCRIPTION

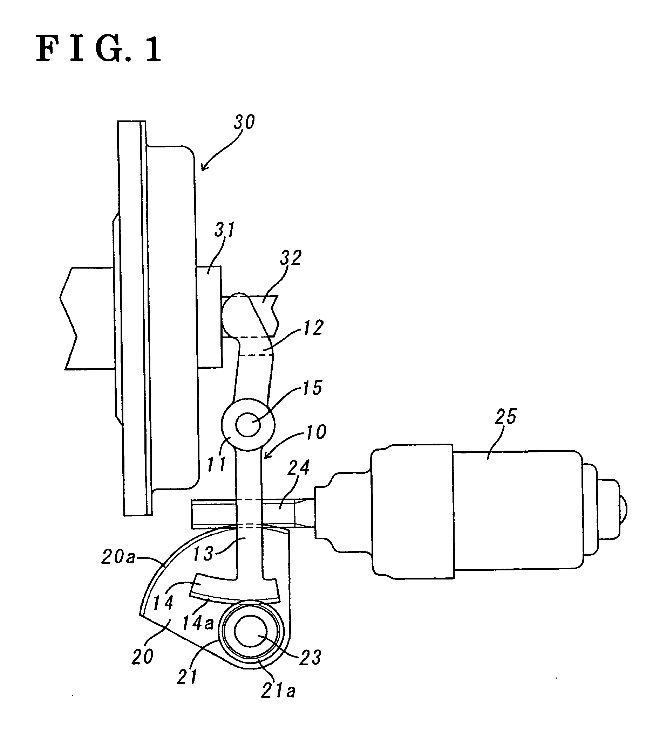

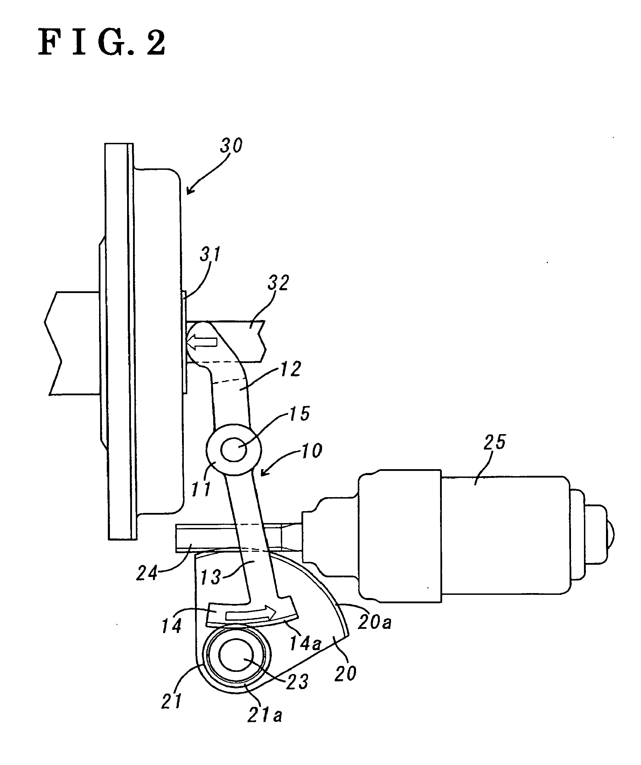

An embodiment of the clutch control system will be explained with reference to Figs. 1 and 2. The clutch control system according to the present embodiment is applied to engage or disengage a friction clutch 30 (i.e., to bring a friction clutch 30 to an engagement state or a disengagement state) serving as a clutch provided between an output shaft of an engine for a vehicle and an input shaft of a transmission (hereinafter referred to as a transmission input shaft) 32. The friction clutch 30 according to the present embodiment is in an engagement state by means of a spring incorporated within the friction clutch 30 when a release bearing 31 is in a free state (i.e., a non-operating state) as shown in Fig. 1. In addition, in Fig. 1, the release bearing 31 extends axially outwardly to a maximum extent. The engagement state of the friction clutch 30 is released by a pressing of the release bearing 31.

A release fork 10 that presses the release bearing 31 so as to cancel the engagement state of the friction clutch 30 includes a boss portion 11 serving as a support portion, a press arm 12, and a drive arm 13. More specifically, as illustrated in Figs. 1 and 2, the boss portion 11 is rotatably supported by a release shaft 15 that is provided at a transmission casing and that extends at one axial side of the friction clutch 30 so as to be orthogonal to the input shaft 32 in a spaced manner. The press arm 12 and the drive arm 13 extend from the boss portion 11 in radially opposite directions from each other. An end portion of the press arm 12 that makes contact with the release bearing 31 is divided into two portions to thereby sandwich the transmission input shaft 32 therebetween. A sector gear 14 at which sector teeth 14a are formed is integrally provided at an end portion of the drive arm 13. The sector teeth 14a are formed into an arc shape concentric to the release shaft 15.

A wheel shaft 23 is provided at the transmission casing in a position opposite from the transmission input shaft 32 relative to the release shaft 15. The wheel shaft 23 is arranged substantially in parallel with the release shaft 15. A pinion gear 21 and a worm wheel 20, which are integrally formed, are rotatably supported by the wheel shaft 23. The pinion gear 21 includes pinion teeth 21 a engaging with the sector teeth 14a of the sector gear 14. The worm wheel 20, which is formed into a fan shape, includes teeth 20a at a most outer circumferential side. The teeth 20a engage with a worm 24 arranged between the release shaft 15 and the wheel shaft 23 so as to be parallel with the transmission input shaft 32 and provided at an end of an electric motor 25 that is attached to the transmission casing.

According to the present embodiment, when the release bearing 31 is in the non-operating state as shown in Fig. 1, the release fork 10 is stopped in a position where the release fork 10 rotates in a clockwise direction to a maximum extent. The end portion of the press arm 12 is in slight contact with, but is not pressed against, an end surface of the release bearing 31 that extends to a maximum extent in the free state. Therefore, the friction clutch 30 is still in the engagement state.

In a case where the worm 24 is driven to rotate in a predetermined direction by the electric motor 25 in the non-operating state of the release bearing 31 so that the worm wheel 20 rotates in the clockwise direction, the pinion gear 21 also rotates in the clockwise direction. Then, the release fork 10 at which the sector gear 14 engaging with the pinion gear 21 is integrally formed rotates in the counterclockwise direction about the release shaft 15 as indicated by hollow arrows in Fig. 2. Therefore, the release bearing 31 is pushed by the end portion of the press arm 12 that is rotating, thereby releasing the engagement state of the friction clutch 30. In such state, when the electric motor 25 is driven to rotate in an opposite direction from the aforementioned predetermined direction, the worm wheel 20 and the pinion gear 21 rotate in the counterclockwise direction. Then, the release fork 10 and the press arm 12 thereof rotate in the clockwise direction. Consequently, the release bearing 31 biased by the spring is returned to a state shown in Fig. 1 to thereby bring the friction clutch 30 to the engagement state.

According to the aforementioned embodiment, the sector gear 14 at which the sector teeth 14a are formed to engage with the pinion teeth 21 a of the pinion gear 21 for rotating the release fork 10 is integrally formed at the drive arm 13. Thus, individual component members of a mechanism for converting rotations of the electric motor 25 into a rotation of the release fork 10 are only the worm 24, the worm wheel 20, and the pinion gear 21. That is, the simple structure is achieved with only three members. Because the clutch control system according to the present embodiment is constituted by the small number of component members and the simple structure, a manufacturing cost of the clutch control system may be decreased. In addition, the rotations of the motor 25 (i.e., a speed thereof) is reduced by two steps, i.e., the first step is achieved by the worm 24 and the worm wheel 20, and the second step is achieved by the pinion gear 21 and the sector gear 14. Thus, a sufficiently large reduction ratio is obtained.

According to the aforementioned embodiment, the press arm 12 and the drive arm 13 of the release fork 10 extend in opposite directions from each other from the boss portion 11. Alternatively, the press arm 12 and the drive arm 13 may extend in the same direction. In such case, the clutch control system may be further downsized. Further, the friction clutch 30 according to the embodiment is in an engagement state by means of the spring when the release bearing 31 is in the free state and in a disengagement state by a pressing of the release bearing 31. Alternatively, the friction clutch 30 may disengage when the release bearing 31 is in the free state and may engage by a pressing of the release bearing 31.

## Claims

1. A clutch control system comprising:
a release fork (10) rotatably supported by a release shaft (15) via a support portion (11) and including a press arm (12) and a drive arm (13) extending from the support portion (11) in a radial direction, the press arm (12) of which an end portion presses a release bearing (31) provided at a clutch (30) to bring the clutch (30) to one of an engagement state and a disengagement state;
a sector gear (14) including sector teeth (14a) integrally formed at an end portion, the sector teeth (14a) being formed into an arc shape concentric to the release shaft (15);
a worm wheel (20) rotatably supported by a wheel shaft (23) arranged in parallel with the release shaft (15), the worm wheel (20) including teeth (20a);
a pinion gear (21) integrally formed at the worm wheel (20) and engaging with the sector teeth (14a); and
a worm (24) driven to rotate by an electric motor (25) and engaging with the teeth (20a) of the worm wheel (20) to rotate the worm wheel (20).

2. A clutch control system according to claim 1, wherein the teeth (20a) are arranged around a rotary axis of the worm wheel (20) and extend around that axis for less than 180°.

3. A clutch control system according to claim 2, wherein the teeth (20a) extend around the axis for about 90°.
